# EUROPEAN PATENT SPECIFICATION

(11) **EP 4 280 688 B1**
(45) Date of publication and mention of the grant of the patent: **16.07.2025**
(21) Application number: 22899615.3
(22) Date of filing: 05.08.2022
(51) Int. Cl.: H04J 11/00, H04W 48/20, H04W 48/18, H04W 60/04, H04W 16/14, H04W 36/00, H04W 48/12, H04W 48/16

(54) **CELL RESELECTION METHOD AND APPARATUS**
VERFAHREN UND VORRICHTUNG ZUR ZELLENNEUAUSWAHL
PROCÉDÉ ET APPAREIL DE RESÉLECTION DE CELLULE

(30) Priority: 08.04.2022 CN 202210365579
(43) Date of publication of application: 22.11.2023
(73) Proprietor: Honor Device Co., Ltd., Shenzhen, Guangdong 518040 (CN)
(72) Inventor: WEI, Zhenrong, Shenzhen, Guangdong 518040 (CN); HE, Yanzhao, Shenzhen, Guangdong 518040 (CN)
(74) Representative: Epping - Hermann - Fischer
(86) International application number: PCT/CN2022/110456
(87) International publication number: WO 2023/193380

(56) References cited:
- CN-A- 111 491 341
- CN-A- 113 382 448
- CN-A- 113 472 470
- CN-A- 113 543 256
- CN-A- 113 543 256
- CN-A- 113 645 688
- CN-A- 113 645 688
- CN-A- 114 466 421
- US-A1- 2011 136 489
- US-A1- 2018 213 454
- US-A1- 2021 321 306

## Description

### TECHNICAL FIELD

This application relates to the field of communication technologies, and in particular, to a cell reselection method and apparatus.

### BACKGROUND

In a mobile communication scenario, cell reselection may be understood as that a terminal selects a cell when a plurality of cells coexist, to switch from a current cell to the selected cell, and further, the terminal may perform a service in an accessed cell. However, the terminal may be unable to access a preferred cell due to network configuration or the like. It can be learned that cell reselection of the terminal needs to be improved.

US 2018/213454 A1 relates to a method of communication at a user equipment (UE) operating within a wireless communication network, comprising selecting to a cell associated with a radio access technology (RAT) in response to performing a first procedure, the first procedure including at least one of a cell selection procedure, a cell reselection procedure, or a handover procedure; acquiring one or more parameters associated with the selected cell identified by a cell global identity (CGI), wherein the one or more parameters include a neighbor frequency list having at least one detected frequency of a neighboring cell; determining that the CGI of the cell corresponds to a stored CGI of a previous cell; and performing at least one second procedure based on determining that the CGI of the cell corresponds to the stored CGI of the previous cell, the second procedure including a communication configuration procedure based at least on the one or more parameters, where performing the at least one communication configuration procedure includes conducting a periodic search within a portion of a discontinuous reception (DRX) duration for at least one frequency in a first performance group list, the first performance group list not including the at least one detected frequency from the neighbor frequency list.

CN 113 645 688 A relates to a network access registration method applied to an electronic terminal device, the method including obtaining cell frequency; matching the cell frequency point with the preset shared network home PLMN frequency point list and the shared network access PLMN frequency point list to obtain the priority of the cell frequency point; according to the obtained cell frequency point priority, selecting a target frequency point in the cell frequency point in the cell frequency point in descending order of priority to receive the system message, so as to complete the network access registration; wherein, the pre-established shared network home PLMN frequency point list records the corresponding shared network cell frequency point when the shared network cell home PLMN and the local home PLMN are the same in the historical network search process; the pre-established shared network home PLMN frequency point list records the frequency points corresponding to the shared network cell where the shared network cell's home PLMN and the local home PLMN are different during the historical network search process.

CN 113 543 256 A relates to a network reselection method applied to a terminal, the method including in the case that the terminal resides on the first-standard network and is in an idle state, determining the historical resident frequency points that meet the reselection criterion from the historical resident frequency points of the second-standard network; reselecting to the cell corresponding to the historical camping frequency point that meets the reselection criterion for camping.

### SUMMARY

This application provides a cell reselection method and apparatus, to increase a possibility that a terminal is reselected to a cell with a better signal. The invention is set out in the appended claims. To achieve the foregoing objective, the following technical solutions are provided in this application:
According to a first aspect, this application provides a cell reselection method as set forth in claim 1. The method includes: A terminal selects at least one piece of target prior frequency information from a plurality of pieces of prior frequency information, performs measurement and reselection evaluation based on the target prior frequency information, and performs cell reselection based on a reselection evaluation result. The target prior frequency information may be prior frequency information selected by the terminal from the plurality of pieces of prior frequency information. In this embodiment, the terminal may actively add the target prior frequency information and use the added target prior frequency information in a cell reselection process. For example, a cell is searched for by using the target prior frequency information, so that a quantity of reselectable cells is increased, and a possibility that the terminal is reselected to a cell with a better signal is increased. In a possible implementation, the target prior frequency information is added to a neighboring cell configuration, the neighboring cell configuration includes neighboring cell frequency information configured by a network device, and the performing measurement and reselection evaluation based on the target prior frequency information includes: performing measurement based on a neighboring cell frequency in the neighboring cell frequency information to obtain a first measurement result, and performing reselection evaluation on the first measurement result based on a neighboring cell reselection configuration in the neighboring cell frequency information; and performing measurement based on a prior frequency in the target prior frequency information to obtain a second measurement result, and performing reselection evaluation on the second measurement result based on a prior reselection configuration in a target prior frequency. In addition to searching for the cell by using the target prior frequency information, the terminal may search for the cell by using the neighboring cell frequency information configured by the network device (such as a base station) to perform cell reselection by using the target prior frequency information and the neighboring cell frequency information, so that the terminal may actively add the target prior frequency information, and may also reuse a cell reselection procedure of the neighboring cell frequency information, and therefore the cell reselection procedure is reused while a quantity of reselectable cells is increased and a possibility that the terminal is reselected to a cell with a better signal is increased.

In a process in which the terminal performs cell reselection by using the neighboring cell frequency information and the target prior frequency information, the terminal performs measurement by using a neighboring cell frequency in the neighboring cell frequency information, and performs reselection evaluation by using a neighboring cell reselection configuration in the neighboring cell frequency information, and the terminal performs measurement by using a prior frequency in the target prior frequency information, and performs reselection evaluation by using a prior reselection configuration in the target prior frequency information, so that reselection evaluation is implemented for different types of frequencies by using reselection configurations that respectively match the different types of frequencies, and accuracy of reselection evaluation is improved. For the target prior frequency information, the terminal may reuse a reselection configuration (corresponding to the prior reselection configuration) previously used for the target prior frequency information, and omit a process of presetting the prior reselection configuration for the target prior frequency information.

The selecting, by a terminal, at least one piece of target prior frequency information from a plurality of pieces of prior frequency information includes: selecting the at least one piece of target prior frequency information from the plurality of pieces of prior frequency information based on a use scenario of the terminal, to select different prior frequency information based on different use scenarios, so as to adapt to a requirement of a use scenario in which the terminal is currently located.

The selecting the at least one piece of target prior frequency information from the plurality of pieces of prior frequency information based on a use scenario of the terminal includes: selecting, from the plurality of pieces of prior frequency information based on the use scenario of the terminal, target prior frequency information of an area that is the same as an area in which the terminal is located. The area may be a geographical area, and a range of the geographical area may be a city level. The area may alternatively be a fence of an area range located by the terminal. Target prior frequency information selected by the terminal in one use scenario is prior frequency information of an area that is the same as the area in which the terminal is located, so that the terminal can improve a success rate of reselection within a signal coverage area of the target prior frequency information. The use scenario may be determined by the terminal based on a public land mobile network with which the terminal currently registers. For example, the terminal may preset a use scenario to which the public land mobile network belongs, for example, preset a correspondence between the public land mobile network and the use scenario. When the terminal registers with a public land mobile network, the terminal may determine, based on the preset correspondence, a use scenario to which the currently registered public land mobile network belongs.

In a possible implementation, the selecting, from the plurality of pieces of prior frequency information based on the use scenario of the terminal, target prior frequency information of an area that is the same as an area in which the terminal is located includes: determining the use scenario of the terminal as a first use scenario, where in the first use scenario, the terminal registers with a first public land mobile network and the terminal is in a first area; and selecting, from the plurality of pieces of prior frequency information, a target prior frequency that belongs to a same operator as the first public land mobile network. And the target prior frequency is in the first area. The first use scenario may be a single-operator scenario, and the single-operator scenario may mean that the first public land mobile network belongs to a single operator. For example, the first public land mobile network belongs to an operator A. In the first use scenario, the target prior frequency information selected by the terminal meets the following condition (which may also be referred to as a requirement): belonging to a same operator as the first public land mobile network and being in the first area.

For example, in the first use scenario, the first public land mobile network belongs to the operator A and the terminal is located in an area 1, and the terminal may select target prior frequency information of the area 1 in the public land mobile network of the operator A. For example, the terminal may select the target prior frequency information of the area 1 in the first public land mobile network.

In a possible implementation, the selecting, from the plurality of pieces of prior frequency information based on the use scenario of the terminal, target prior frequency information of an area that is the same as an area in which the terminal is located includes: determining the use scenario of the terminal as a second use scenario, where in the second use scenario, the terminal registers with a second public land mobile network and the terminal is in a second area; and selecting target prior frequency information that meets a first condition and target prior frequency information that meets a second condition from the plurality of pieces of prior frequency information, where the first condition is: belonging to a same operator as the second public land mobile network and being in the second area, and the second condition is: being in a public land mobile network co-constructed and shared by an operator to which the second public land mobile network belongs and being in the second area.

The second use scenario may be a scenario in which operators perform co-construction and sharing. The scenario in which operators perform co-construction and sharing means that the public land mobile network may be shared by at least two operators. In other words, one public land mobile network belongs to at least two operators, for example, the second public land mobile network belongs to an operator A and an operator B. In the second use scenario, the terminal may select the target prior frequency information with reference to the first condition and the second condition. The first condition may be referred to as a first requirement, and the second condition may be referred to as a second requirement.

In a possible implementation, the selecting, from the plurality of pieces of prior frequency information based on the use scenario of the terminal, target prior frequency information of an area that is the same as an area in which the terminal is located includes: determining the use scenario of the terminal as a third use scenario, where in the third use scenario, the terminal registers with a third public land mobile network and the terminal is in a third area; and selecting target prior frequency information that meets a third condition and target prior frequency information that meets a fourth condition from the plurality of pieces of prior frequency information, where the third condition is: belonging to a same operator as the third public land mobile network and being in the third area, and the fourth condition is: being in a public land mobile network roamed to from the third public land mobile network and being in the third area.

The third use scenario may be a scenario of roaming between different networks of operators. The scenario of roaming between different networks of operators may be: roaming from a public land mobile network of one operator to a public land mobile network of another operator. The two public land mobile networks may correspond to different network standards. For example, the terminal may roam from a public land mobile network of an operator A to a public land mobile network of an operator B. In the third use scenario, the terminal may select the target prior frequency information with reference to the third condition and the fourth condition. The third condition may be referred to as a first requirement, and the fourth condition may be referred to as a second requirement.

In a possible implementation, the selecting, from the plurality of pieces of prior frequency information based on the use scenario of the terminal, target prior frequency information of an area that is the same as an area in which the terminal is located includes: determining the use scenario of the terminal as a fourth use scenario, where in the fourth use scenario, the terminal registers with a fourth public land mobile network and the terminal is in a fourth area; and selecting target prior frequency information that meets a fifth condition, target prior frequency information that meets a sixth condition, and target prior frequency information that meets a seventh condition from the plurality of pieces of prior frequency information, where the fifth condition is: belonging to a same operator as the fourth public land mobile network and being in the fourth area, the sixth condition is: being in a public land mobile network co-constructed and shared by operators to which the fourth public land mobile network belongs and being in the fourth area, and the seventh condition is: being in a public land mobile network roamed to from the fourth public land mobile network and being in the fourth area. The fourth use scenario may be that co-construction and sharing and inter-network roaming are supported. In the fourth use scenario, the terminal may select the target prior frequency information with reference to the fifth condition, the sixth condition, and the seventh condition. The fifth condition corresponds to the first condition or the third condition, the sixth condition corresponds to the second condition, and the seventh condition corresponds to the fourth condition.

In a process in which the terminal selects the target prior frequency information in the first use scenario to the fourth use scenario, a network standard of the target prior frequency information selected by the terminal and a current network standard of the terminal may be a same network standard, or may be different network standards. The terminal may select all target prior frequencies that meet the condition, or may select some prior frequency information that meets the condition. If some target prior frequency information that meets the condition is selected, the terminal may perform selection based on a priority of the prior frequency information, for example, select target prior frequency information with a high priority.

A priority of the first condition is higher than a priority of the second condition. In the second use scenario, the terminal may first select the target prior frequency information based on the first condition, and then select the target prior frequency information based on the second condition. In a same condition, the terminal may select the target prior frequency information based on the priority. Because target prior frequency information of a higher priority leads to higher signal quality and a higher success rate of reselection, when selecting the target prior frequency information based on the priority, the terminal can improve a record of being reselected to a cell with good signal quality and improve a reselection success record. Alternatively, the terminal may select a part of the target prior frequency information based on the first condition, and select a part of the target prior frequency information based on the second condition, so that the terminal can select different types of target prior frequency information. Therefore, both the first condition and the second condition are considered, and the target prior frequency information can be diversified. A priority of the third condition is higher than a priority of the fourth condition, and the terminal may select the target prior frequency information in the third use scenario with reference to the descriptions of the second use scenario. A priority of the fifth condition is higher than a priority of the sixth condition, and the priority of the sixth condition is higher than a priority of the seventh condition. In the fourth use scenario, the terminal may select the target prior frequency information with reference to the descriptions of the second use scenario.

In a possible implementation, the selecting, by a terminal, at least one piece of target prior frequency information from a plurality of pieces of prior frequency information includes: selecting the at least one piece of target prior frequency information from the plurality of pieces of prior frequency information based on a priority of the prior frequency information. Because target prior frequency information of a higher priority leads to higher signal quality and a higher success rate of reselection, when selecting the target prior frequency information based on the priority, the terminal can improve a record of being reselected to a cell with good signal quality and improve a reselection success record.

In a possible implementation, if the target prior frequency information is added to the neighboring cell configuration, an amount of frequency information in the neighboring cell configuration is less than or equal to a preset amount. The preset amount may be a maximum amount of frequency information in the neighboring cell configuration, to limit a total amount of frequency information in the neighboring cell configuration, and reduce time consumption of cell reselection while increasing a quantity of reselectable cells.

In a possible implementation, the selecting, by a terminal, at least one piece of target prior frequency information from a plurality of pieces of prior frequency information includes: selecting the at least one piece of target prior frequency information from the plurality of pieces of prior frequency information when the terminal determines that a preset condition is met, where the preset condition includes a first preset condition and/or a second preset condition, the first preset condition is that an amount of neighboring cell frequency information configured by the network device in the neighboring cell configuration is less than an amount threshold, or there is no neighboring cell frequency information in the neighboring cell configuration, and the second preset condition is that signal quality of a currently accessed cell is less than a first threshold and the terminal is not switched to a cell whose signal quality is greater than a second threshold within preset time, where the first threshold is less than the second threshold. The second preset condition indicates that signal quality of a cell currently accessed by the terminal is poor, and the terminal is not switched to a cell with better signal quality within the preset time. The terminal controls the use of the prior frequency information by using the first preset condition and/or the second preset condition, so that use/dependence of the terminal on the prior frequency information is reduced as much as possible.

In a possible implementation, the method further includes: obtaining the prior frequency information of each frequency based on related information of a plurality of frequencies on which the terminal successfully camps. The related information of the frequency may include a public land mobile network to which the frequency belongs, a frequency value, an area in which the frequency is located, a network standard corresponding to the frequency, a reselection configuration of the frequency, a quantity of use times of the frequency, a quantity of use times of the reselection configuration, and the like. The terminal may obtain the prior frequency information of each frequency through statistics collection. Prior frequency information of a frequency may include a prior frequency and a reselection configuration. The reselection configuration is used to indicate a reselection decision criterion, for example, the reselection configuration includes at least a reselection priority, a high/low priority reselection threshold, a reselection timer, and the like. The prior frequency information distinguishes a country, an operator, a network standard, and an area, to distinguish the prior frequency information by using the country, the operator, the network standard, the area, and the like, and the country and the operator may be represented by public land mobile networks.

When the prior frequency information is obtained through statistics collection, the terminal may obtain the prior frequency information based on a quantity of use times of the frequency and a quantity of use times of the reselection configuration, for example, determine prior frequency information with a largest use ratio as the prior frequency information. A larger use ratio indicates a higher probability that the prior frequency information is used, and better signal quality of a cell reselected based on a prior frequency in the prior frequency information and the prior reselection configuration. Therefore, if the prior frequency information is stored in a data table, a larger use ratio indicates a higher ranking of the prior frequency information, and prior frequency information with a higher ranking when the terminal performs cell reselection may be preferentially selected. The prior frequency information may be stored locally in the terminal, or may be stored in a server. According to a second aspect, this application provides a terminal as set forth in claim 11. The terminal includes a processor and a memory, the memory is configured to store one or more pieces of computer program code, the computer program code includes computer instructions, and when the processor executes the computer instructions, the processor performs the foregoing cell reselection method. According to a third aspect, this application provides a computer storage medium as set forth in claim 12. The computer storage medium includes computer instructions, and when the computer instructions are run on a terminal, the terminal is enabled to perform the foregoing cell reselection method.

### BRIEF DESCRIPTION OF DRAWINGS

FIG. 1 is a schematic diagram of a neighboring cell relationship of a plurality of cells according to this application;
FIG. 2 is a flowchart of a cell reselection method according to this application;
FIG. 3A and FIG. 3B are a flowchart of another cell reselection method according to this application;
FIG. 4 is a diagram of a hardware structure of a terminal according to this application; and
FIG. 5 is a diagram of a software architecture of a terminal according this application.

### DESCRIPTION OF EMBODIMENTS

The following clearly describes the technical solutions in embodiments of this application with reference to the accompanying drawings in embodiments of this application. The terms used in the following embodiments are merely used for describing specific embodiments, and are not intended to limit this application. The singular forms "one", "a", "the", "the foregoing", "this", and "the one" used in this specification and the appended claims of this application are also intended to include expression forms such as "one or more", unless otherwise clearly specified in the context. It should be further understood that in embodiments of this application, "one or more" means one, two, or more than two; and "and/or" describes an association relationship between associated objects and represents that three relationships may exist. For example, A and/or B may represent the following cases: only A exists, both A and B exist, and only B exists, where A and B may be singular or plural. The character "/" generally indicates an "or" relationship between associated objects.

As described in this specification, referring to "one embodiment" or "some embodiments" means that particular features, structures, or characteristics described with reference to one or more embodiments of this application are included in the one or more embodiments. Therefore, the phrases "in one embodiment", "in some embodiments", "in some other embodiments", and the like in various places in this specification do not necessarily all refer to a same embodiment, but mean "one or more but not all embodiments" unless otherwise specifically emphasized in another manner. The terms "include", "comprise", "have", and variants thereof mean "include but are not limited to", unless otherwise specifically emphasized in another manner.

"A plurality of" in embodiments of this application means "greater than or equal to two". It should be noted that in the descriptions of embodiments of this application, words such as "first" and "second" are merely used for distinguishing between descriptions, and cannot be understood as an indication or implication of relative importance, or cannot be understood as an indication or implication of a sequence.

For ease of description, technical terms involved in embodiments of this application are explained first as follows:
A wireless communication system may be understood as including a terminal and a network device. The terminal may also be referred to as a terminal device (Terminal Equipment), user equipment (User Equipment), a mobile station (Mobile Station, MS), a mobile terminal (Mobile Terminal), or the like. The network device includes at least one of a radio access network device and a core network device. An example of the radio access network device is a base station, and an example of the core network device is a mobility management entity (Mobility Management Entity, MME). The wireless communication system includes but is not limited to a global system for mobile communications (Global System for Mobile Communication, GSM) system, a code division multiple access (Code Division Multiple Access, CDMA) system, a wideband code division multiple access (Wideband Code Division Multiple Access, WCDMA) system, a long term evolution (Long Term Evolution, LTE) system, an LTE frequency division duplex (Frequency Division Duplex, FDD) system, an LTE time division duplex (Time Division Duplex, TDD) system, a universal mobile telecommunication system (Universal Mobile Telecommunication System, UMTS), and a fifth generation mobile communication system (Fifth Generation Mobile Communication System 5G).

The GSM system may also be referred to as a second generation communication system, that is, 2G. The CDMA system and the WCDMA system may also be referred to as third generation communication systems, that is, 3G. The LTE system, the LTE TDD system, and the like may also be referred to as fourth generation communication systems, that is, 4G.

Network sharing may be understood as that different operators share radio resources of a network; in other words, a plurality of operators share a radio access network.

Cell reselection (Cell Reselection) means cell reselection completed by the terminal in an IDLE (idle) state, and is a process in which the terminal selects a best cell by monitoring signal quality of a neighboring cell and signal quality of a current cell in the IDLE state, to provide a service signal.

Descendant standards and predecessor standards: A sequence: 2G, 3G, 4G, and 5G is obtained based on a development sequence of network standards. The descendant standard and the predecessor standard are described relative to each other for any two of all network standards in the sequence. In the sequence, a preceding standard is a predecessor standard of a subsequent standard, and the subsequent standard is a descendant standard of the preceding standard. For example, 5G is a descendant standard of 2G, 3G, and 4G, 3G is a descendant standard of 2G, and 3G is a predecessor standard of 4G.

A prior frequency is also referred to as a historical frequency, and the prior frequency may be understood as a frequency on which the terminal successfully camps. After successfully camping on a cell at a specific frequency, the terminal uses the frequency as a prior frequency. One cell may have a plurality of frequencies, and different cells may have a same frequency.

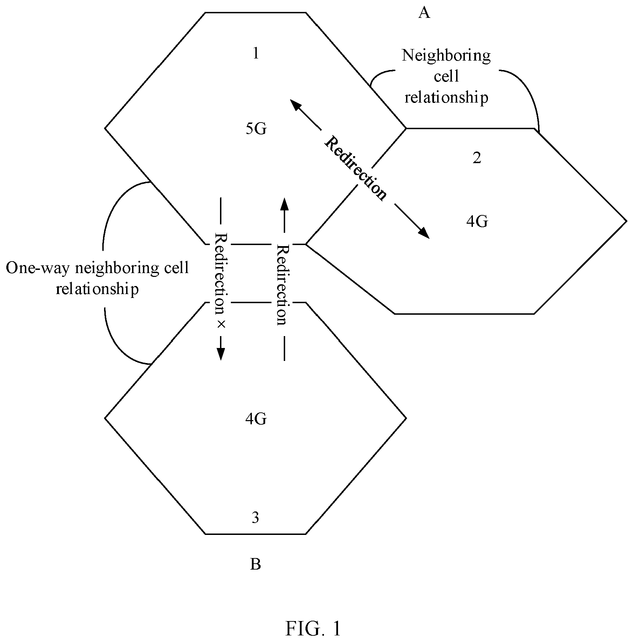

FIG. 1 shows a configuration example of a wireless network in a network sharing scenario:
It is assumed that a cell 1 is a cell of a 5G standalone (Standalone, SA) network of an operator A, and a cell 2 is a cell of an LTE network (which may also be referred to as a 4G network) of the operator A. The cell 2 is an anchor cell of a 5G network, but signal strength is approximately -95 dB. Although the 5G network is displayed on a terminal, a network rate experienced by a user in the cell is poor.

A cell 3 is a cell of an LTE network of an operator B. It is assumed that signal strength of the cell 3 is approximately -80 dB and is not an anchor cell, and the 4G network is displayed on the terminal, and a network rate experienced by the user in the cell is good.

The cell 1 and the cell 2 are pre-configured as a neighboring cell relationship. The cell 3 and the cell 1 are pre-configured as a one-way neighboring cell relationship. Based on a communication protocol, the one-way neighboring cell relationship enables the terminal to be reselected from the cell 3 to the cell 1, but the terminal cannot be reselected from the cell 1 to the cell 3. No neighboring cell relationship is configured between the cell 3 and the cell 2. Based on the communication protocol, the terminal cannot be reselected from the cell 2 to the cell 3 or from the cell 3 to the cell 2.

For example, the terminal is a mobile phone. It is assumed that the mobile phone camps on the cell 1 after being powered on and establishes an RRC connection to the cell 1, or the mobile phone establishes an RRC connection to the cell 1 after moving to the cell 1, that is, the mobile phone is in the cell 1 of the 5G network. It is assumed that a signal of the cell 1 is poor, for example, current signal strength is approximately -115 dB, and the terminal may initiate a cell reselection procedure. Based on the foregoing resource configuration, because the cell 2 is in the neighboring cell relationship with the cell 1 and the cell 3 is in the one-way neighboring cell relationship with the cell 1, the mobile phone may be reselected from the cell 1 to the cell 2, but cannot be reselected from the cell 1 to the cell 3. Therefore, although signal quality of the cell 3 is better than signal quality of the cell 2, the mobile phone cannot be reselected from the cell 1 to the cell 3 because there is the one-way neighboring cell relationship between the cell 3 and the cell 1.

It can be learned that in a scenario of network sharing, although the mobile phone can implement cell reselection, there is a possibility that the mobile phone cannot be reselected to a cell with a better signal. Further, the inventors have found in the course of research that, for some reasons, it is difficult to configure a neighboring cell relationship between cells of different operators, and therefore it is difficult to implement reselection from the cell 1 to the cell 3 by configuring the neighboring cell relationship between the cell 1 and the cell 3.

A cell reselection method provided in embodiments of this application is to increase a possibility that a terminal is reselected to a cell with a better signal. In addition, the cell reselection method provided in embodiments of this application is applicable to, but not limited to, the scenario shown in FIG. 1.

In addition to the scenario of network sharing, the cell reselection method may be applied to a scenario of non-network sharing. For example, alternatively, all the cell 1, the cell 2, and the cell 3 shown in FIG. 1 may be cells of the operator A. In this case, even if the cell 1 and the cell 3 are pre-configured as the neighboring cell relationship, a cell may be reselected by using the method provided in embodiments of this application.

In addition to cell reselection between networks of different standards (the 5G network and the 4G network described in FIG. 1), the cell reselection method may be applied to cell reselection between networks of a same standard. For example, alternatively, all the three cells shown in FIG. 1 may be cells of the 5G network or cells of the 4G network.

The 5G SA network shown in FIG. 1 may be replaced with a 5G non-standalone (NonStandalone, NSA) network.

In addition to the 5G network and the 4G network shown in FIG. 1, the cell reselection method may be used in a 2G or 3G network, for example, reselection from a cell of the 3G network to a cell of the 2G network.

In addition to reselection from a network of a descendant standard to a network of a predecessor standard, reselection from the network of the predecessor standard to the network of the descendant standard is also possible, for example, reselection from the cell of the 4G network to the cell of the 5G network, and for another example, reselection from the cell of the 3G network to the cell of the 4G or 5G network.

According to the cell reselection method provided in embodiments of this application, prior frequency information may be added to a neighboring cell configuration of a terminal, where the neighboring cell configuration includes neighboring cell frequency information configured by a network (such as neighboring cell frequency information configured by a base station) and the prior frequency information; and measurement and reselection evaluation are performed on the neighboring cell frequency information and the prior frequency information to complete cell reselection. Because the prior frequency information is added to the neighboring cell configuration, a cell is searched for by using the prior frequency information, so that a quantity of reselectable cells is increased, and a possibility that the terminal is reselected to a cell with a better signal is increased.

The prior frequency information may be selected by the terminal from a prior frequency database, and then the prior frequency information is added to the neighboring cell configuration. Prior frequency information in the prior frequency database may be obtained by the terminal based on big data statistics collection. Big data records related information of a specific frequency on which the terminal successfully camps, and prior frequency information of each frequency is obtained based on related information of a plurality of frequencies on which the terminal successfully camps. The prior frequency information includes a prior frequency and a reselection configuration. The reselection configuration is used to indicate a reselection decision criterion, for example, the reselection configuration includes at least a reselection priority, a high/low priority reselection threshold, a reselection timer, and the like. The prior frequency information distinguishes a country, an operator, a network standard, and an area, to distinguish the prior frequency information by using the country, the operator, the network standard, the area, and the like, and the country and the operator may be represented by public land mobile networks (Public Land Mobile Network, PLMN). The prior frequency information may be recorded in the prior frequency database in a form of a data table, as shown in Table 1.

**Table 1 Prior frequency table**

| Operator PLMN | Network standard RAT | Prior frequency Freq | Area | Prior reselection configuration Config |
|---|---|---|---|---|
| PLMN1 | 4G | Freq1 | Area1 | Config1 |
| PLMN1 | 4G | Freq2 | Area1 | Config1 |
| PLMN1 | 4G | Freq2 | Area2 | Config1 |
| PLMN1 | 5G | Freq3 | Area1 | Config2 |
| PLMN2 | 4G | Freq4 | Area1 | Config3 |
| PLMN2 | 5G | Freq5 | Area1 | Config4 |
| ... | ... | ... | ... | ... |

One piece of prior frequency information is recorded in each row in Table 1. For example, a prior frequency Freq1 is preset on a 4G network standard for an operator 1 (PLMN1 in Table 1). The prior frequency Freq1 is valid only in an area Area1, and the prior frequency Freq1 has a prior reselection configuration Config1. A range of the area may be a city level or a fence of an area range located by the terminal.

A prior frequency in an area and a prior reselection configuration in the prior frequency may be obtained through big data statistics collection. There are a plurality of frequencies in one area. For each frequency in a same area, the terminal can count a use ratio of each frequency in the area, and select at least one frequency as a prior frequency in the area based on the use ratio of each frequency in the area. For example, the terminal may select a frequency whose use ratio is greater than a preset ratio as the prior frequency in the area. For another example, the terminal may select a frequency with a relatively large use ratio as the prior frequency in the area. Use ratio of each frequency in the area = Quantity of use times of the frequency in the area/Sum of quantities of use times of all frequencies in the area.

There are a plurality of reselection configurations on one frequency. For each reselection configuration on a same frequency, the terminal may count a use ratio of each reselection configuration on the frequency, and select at least one reselection configuration as a prior reselection configuration of the frequency based on the use ratio of each reselection configuration on the frequency. For example, the terminal may select a reselection configuration whose use ratio is greater than a preset ratio as the prior reselection configuration of the frequency. For another example, the terminal may select a reselection configuration with a relatively large use ratio as the prior reselection configuration of the frequency. Use ratio of each reselection configuration on the frequency = Quantity of use times of the reselection configuration on the frequency/Sum of quantities of use times of all reselection configurations on the frequency.

The prior frequency information in Table 1 may be arranged at random, or may be ranked after statistics collection. For example, a use ratio of the prior frequency information is counted. A larger use ratio indicates a higher probability that the prior frequency information is used, and better signal quality of a cell reselected based on the prior frequency in the prior frequency information and the prior reselection configuration. Therefore, a larger use ratio indicates a higher ranking of the prior frequency information. Use ratio of the prior frequency information = Quantity of use times of the prior reselection configuration/Sum of quantities of use times of all prior reselection configurations.

The prior frequency information may exist locally in the terminal, or may exist in a server, and the server may be a cloud server. The server may actively or passively send the prior frequency information to the terminal, for example, the server may send the prior frequency information to the terminal in the following manners:
1) The server may send the prior frequency information to the terminal after updating the prior frequency information. 2) The server periodically sends the prior frequency information to the terminal. 3) The terminal may send an obtaining request to the server, and the server sends the prior frequency information to the terminal in response to the obtaining request. The prior frequency information sent by the server may be updated prior frequency information, that is, prior frequency information that exists in the server but not in the terminal.

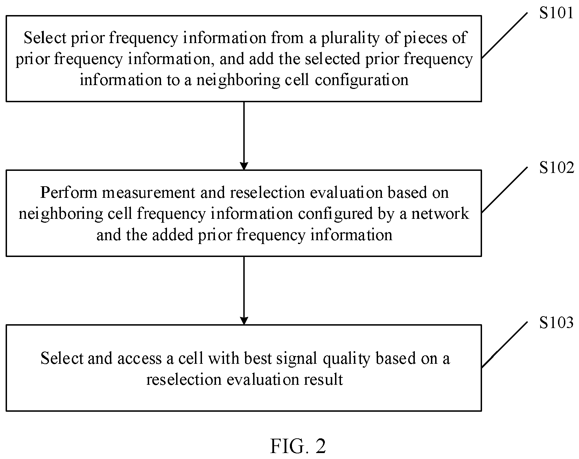

As shown in FIG. 2, a procedure in which the terminal performs cell reselection by using the prior frequency information may include the following steps.

S101: The terminal selects prior frequency information from a plurality of pieces of prior frequency information, and adds the selected prior frequency information to a neighboring cell configuration.

In some implementations, the terminal selects the prior frequency information when a preset condition is met, and the preset condition includes at least one of the following 1, 2, and 3.
1. An amount of neighboring cell frequency information configured by a network in the neighboring cell configuration is less than an amount threshold, or there is no neighboring cell frequency information. The amount threshold may be pre-configured. For example, the amount threshold is 2. The neighboring cell frequency information configured by the network may be neighboring cell frequency information configured by an access network device (such as a base station). If there is a relatively small amount of neighboring cell frequency information, a range of selectable cells for the terminal in the cell reselection procedure is relatively small, and a signal of a cell to which the terminal is reselected based on the neighboring cell frequency information is poor, for example, the cell 2 shown in FIG. 1, the terminal may use the amount of neighboring cell frequency information in the neighboring cell configuration as a preset condition to trigger the terminal to add the prior frequency information to the neighboring cell configuration.
2. Signal quality of a cell currently accessed by the terminal is poor, and the terminal is not switched to a cell with better signal quality within preset time. The preset time may be pre-configured, and a value of the preset time is not limited in this embodiment.
   For example, after being switched from one cell to another cell, the terminal is switched back to the previous cell. As shown in FIG. 1, after the terminal is reselected from the cell 1 of the 5G network to the cell 2 of the 4G network, the signal of the cell 2 is poor, but the terminal cannot be reselected from the cell 1 or the cell 2 to the cell 3. Therefore, the terminal returns to the cell 1 of the 5G network from the cell 2 of the 4G network. In this way, the terminal still camps on the cell 1 after a plurality of times of reselection, and this indicates that the terminal is not switched to a cell with better signal quality within the preset time. For another example, after the terminal accesses a cell, although signal quality of the cell is poor, there is no other cell to which the terminal can be switched within the preset time, and therefore, the terminal still camps on the cell within the preset time.
3. Signal quality of a cell currently accessed by the terminal is poor, the terminal is not switched to a cell with better signal quality within preset time, and an amount of neighboring cell frequency information configured by a network in the neighboring cell configuration is less than an amount threshold, or there is no neighboring cell frequency information.

S102: Perform measurement and reselection evaluation based on the neighboring cell frequency information configured by the network and the added prior frequency information. If the neighboring cell frequency information in the neighboring cell configuration is null (in other words, there is no neighboring cell frequency information in the neighboring cell configuration), the terminal may perform measurement and reselection evaluation based on the added prior frequency information. If the neighboring cell configuration includes the neighboring cell frequency information and the prior frequency information, the terminal may synchronously use a neighboring cell frequency in the neighboring cell frequency information and a prior frequency in the prior frequency information to perform measurement.

During reselection evaluation, the terminal may perform reselection evaluation by using a neighboring cell reselection configuration in the neighboring cell frequency information for the neighboring cell frequency, and the terminal may perform reselection evaluation by using a prior reselection configuration in the prior frequency information for the prior frequency.

S103: Select and access a cell with best signal quality based on a reselection evaluation result, so that the terminal may be reselected to the cell with the best signal quality in the neighboring cell configuration.

After the terminal completes cell reselection, if an identifier of the reselected cell is the same as an identifier of a previously accessed cell, the terminal may not send a reselection feedback message to an access network device, and if the identifier of the reselected cell is different from the identifier of the previously accessed cell, the terminal may send the reselection feedback message to the access network device, and the reselection feedback message may carry the identifier of the reselected cell, to notify the access network device of the cell currently accessed by the terminal.

In the cell reselection method, the terminal may add the prior frequency information to the neighboring cell configuration of the terminal, where the neighboring cell configuration includes the neighboring cell frequency information configured by the network (such as the neighboring cell frequency information configured by the base station) and the prior frequency information; and performs measurement and reselection evaluation on the neighboring cell frequency information and the prior frequency information to complete cell reselection. Because the prior frequency information is added to the neighboring cell configuration, a cell is searched for by using the prior frequency information, so that a quantity of reselectable cells is increased, and a possibility that the terminal is reselected to a cell with a better signal is increased.

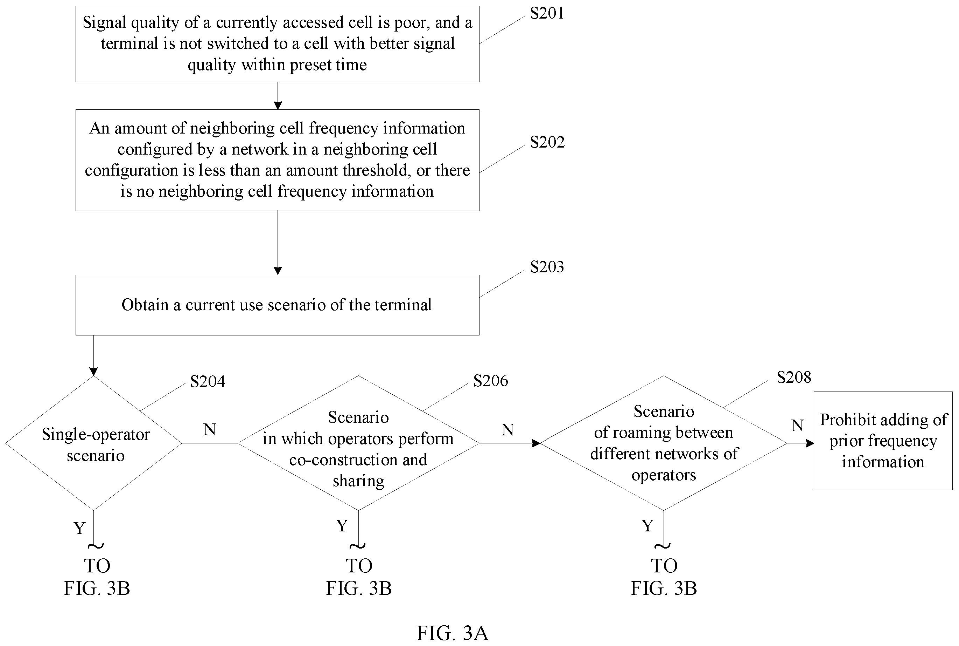

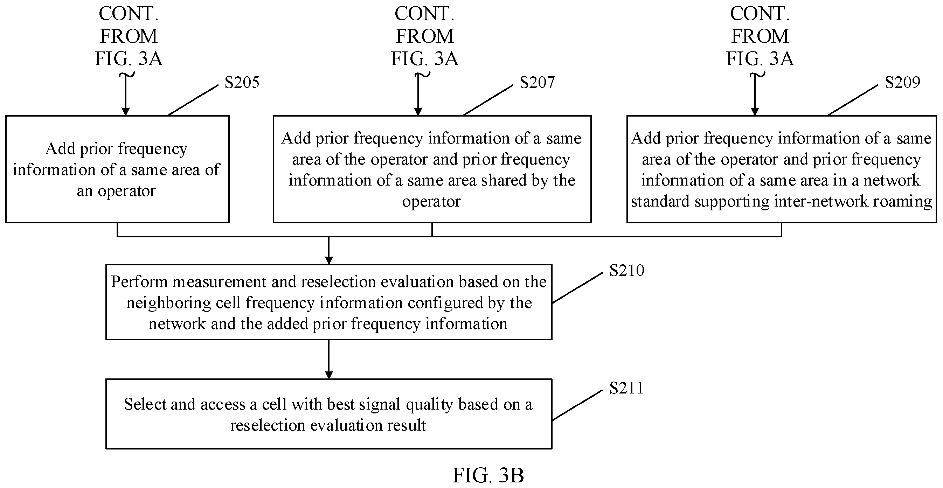

The terminal may add the prior frequency information based on a use scenario, and a corresponding flowchart is shown in FIG. 3A and FIG. 3B. FIG. 3A and FIG. 3B show a flowchart of another cell reselection method. The cell reselection method may include the following steps. S201: Signal quality of a cell currently accessed by a terminal is poor, and the terminal is not switched to a cell with better signal quality within preset time.

S202: An amount of neighboring cell frequency information configured by a network in a neighboring cell configuration is less than an amount threshold, or there is no neighboring cell frequency information. It can be learned from step S201 and step S202 that a preset condition for triggering the terminal to select prior frequency information is: The signal quality of the cell currently accessed by the terminal is poor, the terminal is not switched to the cell with better signal quality within the preset time, and the amount of neighboring cell frequency information configured by the network in the neighboring cell configuration is less than the amount threshold or there is no neighboring cell frequency information.

S203: Obtain a current use scenario of the terminal. The use scenario includes a single-operator scenario, a scenario in which operators perform co-construction and sharing, and a scenario of roaming between different networks of operators. The single-operator scenario means that a PLMN belongs to a single operator. The scenario in which operators perform co-construction and sharing means that a PLMN may be shared by at least two operators; in other words, one PLMN belongs to at least two operators. The scenario of roaming between different networks of operators means roaming from a PLMN of one operator to a PLMN of another operator, and the two PLMNs may correspond to different network standards.

The terminal may preset a use scenario of the PLMN, for example, preset a correspondence between the PLMN and the use scenario. When the terminal registers with a PLMN, the terminal may determine a use scenario of the currently registered PLMN based on the preset correspondence.

S204: Determine whether the use scenario is the single-operator scenario, and if yes, perform step S205, or if no, perform step S206.

S205: Add prior frequency information of a same area of an operator in the use scenario to the neighboring cell configuration. In other words, the terminal may select, based on the area, prior frequency information in a PLMN belonging to the operator. The selected prior frequency information may be prior frequency information that belongs to a same operator as the PLMN with which the terminal currently registers. And the selected prior frequency information belongs to the same area in which the terminal is currently located.

Table 1 is used as an example. It is assumed that the terminal registers with the PLMN1, a frequency of a currently accessed cell is Freq0, and the PLMN1 belongs to a single operator. In this case, if signal quality of the frequency Freq0 is poor, the terminal is not switched to a cell with good signal quality within a period of time, and an access network device is configured with only a neighboring cell frequency Freq1 of 4G in the Area1, the terminal may add, to the neighboring cell configuration, the prior frequency Freq1 in the 4G network standard and the prior frequency Freq3 in the 5G network standard belonging to PLMN1 and Area1 in Table 1, and may also add a prior reselection configuration of the prior frequency Freq1 and a prior reselection configuration of the prior frequency Freq3 to the neighboring cell configuration. The two prior reselection configurations are used for reselection evaluation.

It can be learned from the example that in the single-operator scenario, prior frequency information selected by the terminal meets a requirement that the prior frequency information is prior frequency information in the PLMN of the operator in the area that is the same as the area in which the terminal is currently located, and a network standard of the prior frequency information and a current network standard of the terminal may be a same network standard, or may be different network standards.

During selection of a frequency, all prior frequency information that meets the requirement may be selected, or some prior frequency information that meets the requirement may be selected. For example, an amount may be limited in the neighboring cell configuration. If an amount of prior frequency information that meets the requirement exceeds a limit in the neighboring cell configuration, a part of the prior frequency information is selected, so that a total amount of frequency information in the neighboring cell configuration does not exceed a limit. If the part of the prior frequency information that meets the requirement is selected, the terminal may perform selection based on a priority of the prior frequency information that meets the requirement, for example, prior frequency information with a high priority is selected. The priority of the prior frequency information is indicated by a ranking of the prior frequency information in Table 1. A higher ranking indicates a higher priority, and a lower ranking indicates a lower priority.

S206: Determine whether the use scenario is the scenario in which operators perform co-construction and sharing, and if yes, perform step S207, or if no, perform step S208.

S207: Add, to the neighboring cell configuration, prior frequency information of a same area of the operator in the use scenario and prior frequency information of a same area shared by the operator. In the use scenario in which operators perform co-construction and sharing, the terminal may select two types of prior frequency information based on an area. One selected type of prior frequency information belongs to a same operator as the PLMN with which the terminal currently registers. And the selected prior frequency information belongs to the same area in which the terminal is currently located. The other is prior frequency information that is co-constructed and shared by an operator of the PLMN with which the terminal currently registers and whose area is the same as the area in which the terminal is currently located.

Table 1 is used as an example. It is assumed that the terminal registers with the PLMN1, a frequency of a currently accessed cell is Freq0, and the PLMN1 and the PLMN2 belong to an operator that is shared by both 4G and 5G. In this case, if signal quality of the frequency Freq0 is poor, the terminal is not switched to a cell with good signal quality within a period of time, and the access network device is configured with only a neighboring cell frequency Freq1 of 4G in the Area1, the prior frequency information that may be added by the terminal to the neighboring cell configuration includes: the prior frequency Freq1 in the 4G network standard and the prior frequency Freq3 in the 5G network standard belonging to the PLMN1 and the Area1 in Table 1, and the prior frequency Freq4 in the 4G network standard and the prior frequency Freq5 in the 5G network standard belonging to the PLMN2 and Area1 in Table 1.

A prior reselection configuration of the prior frequency Freq1, a prior reselection configuration of the prior frequency Freq3, a prior reselection configuration of the prior frequency Freq4, and a prior reselection configuration of the prior frequency Freq5 may also be added to the neighboring cell configuration. The four prior reselection configurations are used for reselection evaluation. It can be learned from the example that in the scenario in which operators perform co-construction and sharing, the prior frequency information selected by the terminal meets two requirements. A first requirement is that the prior frequency information is prior frequency information in a (non-shared) PLMN belonging to the operator in an area that is the same as the area in which the terminal is currently located, and a second requirement is that the prior frequency information is prior frequency information in a PLMN co-constructed and shared by the operator in the area that is the same as the area in which the terminal is currently located. A network standard of the prior frequency information and a current network standard of the terminal may be a same network standard, or may be different network standards.

During selection of a frequency, all prior frequency information that meets the requirements may be selected, or some prior frequency information that meets the requirements may be selected. In an implementation, the terminal may perform selection based on a priority of the prior frequency information that meets the requirements. For descriptions of the priority, refer to the foregoing descriptions. In another implementation, the terminal may first select prior frequency information that meets the first requirement, and then select prior frequency information that meets the second requirement, and in this manner, the terminal may select only the prior frequency information that meets the first requirement. In still another implementation, the terminal may select, based on selection of some prior frequency information that meets the first requirement, some prior frequency information that meets the second requirement, so that both the first requirement and the second requirement are considered, and operators to which the frequency belongs are diversified. For example, when an amount is limited in the neighboring cell configuration, the terminal may select the prior frequency information in the foregoing implementation.

S208: Determine whether the use scenario is the scenario of roaming between different networks of operators, and if yes, perform step S209, or if no, prohibit adding of the prior frequency information.

S209: Add, to the neighboring cell configuration, prior frequency information of a same area of an operator in the use scenario and prior frequency information of a same area in a network standard supporting inter-network roaming. When the use scenario is the scenario of roaming between different networks of operators, the terminal may select two types of prior frequency information based on an area. One selected type of prior frequency information belongs to a same operator as the PLMN with which the terminal currently registers. And the prior frequency information belongs to the same area in which the terminal is currently located. The other is prior frequency information of a PLMN to which the terminal can be roamed from a current PLMN and in the area that is the same as the area in which the terminal is currently located.

Table 1 is used as an example. It is assumed that the terminal registers with the PLMN1, a frequency of a currently accessed cell is Freq0, and the PLMN1 supports roaming to the 5G network standard of the PLMN2 through inter-network roaming, and supports inter-network roaming in the Area1. If signal quality of the frequency Freq0 is poor, the terminal is not switched to a cell with good signal quality within a period of time, and the access network device is configured with only a neighboring cell frequency Freq1 of 4G in the Area1, the prior frequency information that may be added by the terminal to the neighboring cell configuration includes: the prior frequency Freq1 in the 4G network standard and the prior frequency Freq3 in the 5G network standard in belonging to the PLMN1 and the Area1 in Table 1, and the prior frequency Freq5 in the 5G network standard belonging to the PLMN2 and the Area1 in Table 1. The prior frequency Freq4 belonging to the PLMN2, in the Area1, and in the 4G network standard is not added to the neighboring cell configuration because the PLMN1 does not support roaming to the 4G network standard of the PLMN2 through inter-network roaming. A prior reselection configuration of the prior frequency Freq1, a prior reselection configuration of the prior frequency Freq3, and a prior reselection configuration of the prior frequency Freq5 may also be added to the neighboring cell configuration. The three prior reselection configurations are used for reselection evaluation.

It can be learned from the example that in the scenario of roaming between different networks of operators, the prior frequency information selected by the terminal meets two requirements. A first requirement is that the prior frequency information is prior frequency information belonging to a (non-shared) PLMN of the operator and in the area that is the same as the area in which the terminal is currently located. A second requirement is that the prior frequency information is prior frequency information in a PLMN to which the terminal can be roamed from the PLMN and in the area that is the same as the area in which the terminal is currently located. A network standard of the prior frequency information and a current network standard of the terminal may be a same network standard, or may be different network standards.

During selection of a frequency, all prior frequency information that meets the requirements may be selected, or some prior frequency information that meets the requirements may be selected. In an implementation, the terminal may perform selection based on a priority of the prior frequency information that meets the requirements. For descriptions of the priority, refer to the foregoing descriptions. In another implementation, the terminal may first select prior frequency information that meets the first requirement, and then select prior frequency information that meets the second requirement, and in this manner, the terminal may select only the prior frequency information that meets the first requirement. In still another implementation, the terminal may select, based on selection of some prior frequency information that meets the first requirement, some prior frequency information that meets the second requirement, so that both the first requirement and the second requirement are considered, and operators to which the frequency belongs are diversified. For example, when an amount is limited in the neighboring cell configuration, the terminal may select the prior frequency information in the foregoing implementation.

If the terminal is in the Area2, and inter-network roaming is not supported in the Area2, the terminal cannot add a prior frequency in the 5G network standard of the PLMN2 when the terminal is in the Area2. If roaming to the 5G network standard of the PLMN2 from the PLMN1 through inter-network roaming in the Area1 is supported, and the PLMN1 and the PLMN2 belong to an operator shared by both 4G and 5G, the prior frequency Freq4 belonging to the PLMN2, in the Area1, and in the 4G network standard in Table 1 may also be added to the neighboring cell configuration. If the terminal supports co-construction and sharing and inter-network roaming at the same time, the terminal may select the prior frequency information with reference to the single-operator scenario, the scenario in which operators perform co-construction and sharing, and the scenario of roaming between different networks of operators. For example, the terminal may preferentially select the prior frequency information from a single operator, then select the prior frequency information from co-construction and sharing of the operators, and finally select the prior frequency information from inter-network roaming of the operators, so that an amount of frequency information in the neighboring cell configuration is not greater than a preset amount (that is, a maximum amount of frequency information). When the prior frequency information is selected in a same scenario, prior frequency information with a high priority is selected.

S210: Perform measurement and reselection evaluation based on the neighboring cell frequency information configured by the network and the added prior frequency information.

S211: Select and access a cell with best signal quality based on a reselection evaluation result, so that the terminal may be reselected to the cell with the best signal quality in the neighboring cell configuration.

It can be learned from the cell reselection method shown in FIG. 3A and FIG. 3B that prior frequency information pre-stored by the terminal may be applied to the cell reselection process. In the cell reselection process, the terminal may select matched prior frequency information based on the use scenario, so that different prior frequency information may be selected based on different use scenarios, to adapt to a requirement of a use scenario in which the terminal is currently located. Then, measurement and reselection evaluation are performed with reference to the neighboring cell frequency information configured by the access network device and the prior frequency information added by the terminal. Because the prior frequency information is added to the neighboring cell configuration, a cell is searched for by using the prior frequency information, so that a quantity of reselectable cells is increased, and a possibility that the terminal is reselected to a cell with a better signal is increased. In addition, when reselection evaluation is performed on the added prior frequency information, the terminal may perform reselection evaluation based on the prior reselection configuration in the prior frequency information, reuse a reselection configuration previously used by the prior frequency information, and omit a process of presetting a reselection configuration for the prior frequency information.

With reference to the scenario in FIG. 1, it is assumed that the terminal is in the cell 1 of the 5G network. If a signal of the cell 1 is poor, for example, current signal strength is approximately -115 dB, and the terminal is not switched to another cell within specific time, the terminal may initiate a cell reselection procedure. Because the cell 2 is in the neighboring cell relationship with the cell 1, a frequency of the cell 2 is configured in the neighboring cell configuration by the access network device as a neighboring cell frequency. Although the cell 3 and the cell 1 are in the one-way neighboring cell relationship, a frequency of the cell 3 is written in the prior frequency table in Table 1 as a prior frequency, and the frequency of the cell 3 may be used as a prior frequency of the cell 1. Then, the terminal may add the frequency of the cell 3 to the neighboring cell configuration, and the terminal may perform measurement and reselection evaluation on the frequency of the cell 2 and the frequency of the cell 3, so that the terminal may be reselected to the cell 2 or the cell 3. Compared with a case in which the terminal can be reselected only to the cell 2 based on the neighboring cell relationship, a quantity of cells to which the terminal can be reselected is increased, and a possibility that the terminal is reselected to a cell with a better signal is increased.

The cell reselection method provided in the foregoing embodiments may be applicable to a terminal such as a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, or a smartwatch.

The terminal may include a processor and a memory. The memory is configured to store one or more pieces of computer program code, the computer program code includes computer instructions, and when the processor executes the computer instructions, the processor performs the foregoing cell reselection method.

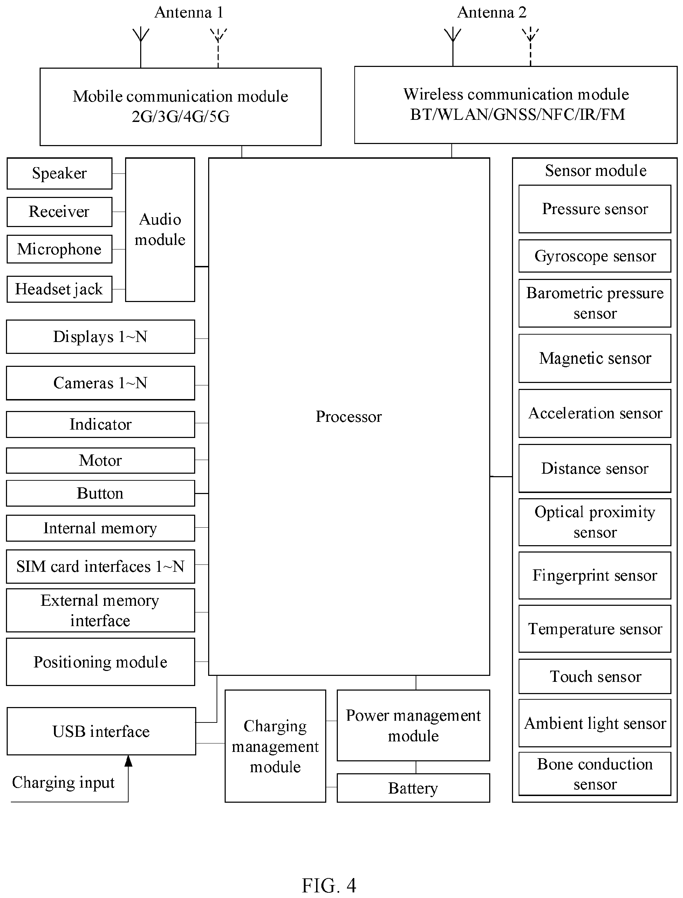

FIG. 4 is a diagram of a hardware structure of a terminal according to an embodiment of this application. The terminal may include a processor, an external memory interface, an internal memory, a universal serial bus (universal serial bus, USB) interface, a charging management module, a power management module, a battery, an antenna 1, an antenna 2, a mobile communication module, a wireless communication module, a sensor module, a positioning module, a button, a motor, an indicator, a camera, a display, a subscriber identity module (subscriber identity module, SIM) card interface, and the like. The audio module may include a speaker, a receiver, a microphone, a headset jack, and the like. The sensor module may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure illustrated in this embodiment does not constitute a specific limitation on the terminal. In some other embodiments, the terminal may include more or fewer components than those in the figure, or combine some components, or split some components, or have different component arrangements. The components in the figure may be implemented by hardware, software, or a combination of software and hardware.

The processor may include one or more processing units. For example, the processor may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate devices or may be integrated into one or more processors. The processor is a nerve center and a command center of the terminal. The controller may generate an operation control signal based on an instruction operation code and a timing signal, to complete control of instruction fetching and instruction execution.

The external memory interface may be configured to connect to an external storage card such as a Micro SD card, to expand a storage capability of the terminal. The external storage card communicates with the processor through the external memory interface, to implement a data storage function. For example, prior information or the like is stored in the external storage card. The internal memory may be configured to store computer executable program code, and the executable program code includes instructions. The processor executes various functional applications and data processing of the terminal by running the instructions stored in the internal memory. For example, in this application, the processor runs the instructions stored in the internal memory, so that the terminal is enabled to perform the cell reselection method provided in this application.

The antenna 1 and the antenna 2 are configured to transmit and receive an electromagnetic wave signal. Each antenna in the terminal may be configured to cover one or more communication frequency bands. Different antennas may also be multiplexed to increase antenna utilization. For example, the antenna 1 may be multiplexed into a diversity antenna of a wireless local area network. In some other embodiments, the antenna may be used together with a tuning switch.

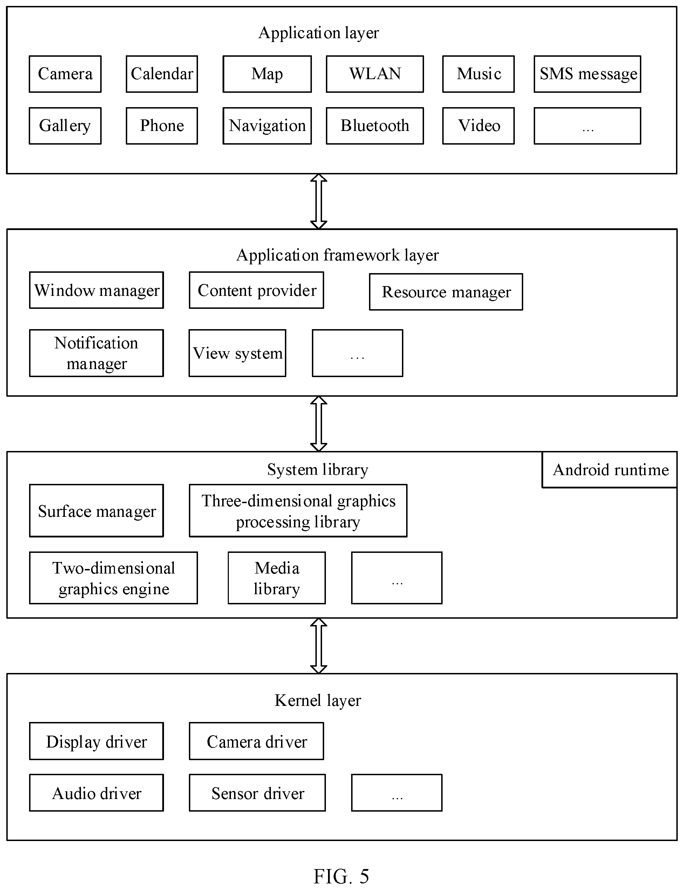

The mobile communication module may provide a wireless communication solution that is applied to the terminal, including 2G/3G/4G/5G and the like. The wireless communication module may provide a wireless communication solution such as a wireless local area network (wireless local area network WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC), or an infrared (infrared, IR) technology applied to the terminal. FIG. 5 is a block diagram of a software structure of a terminal according to an embodiment of this application. A layered architecture divides software into several layers, and each layer has a clear role and task. The layers communicate with each other by using software interfaces. In some embodiments, an Android system is divided into four layers: an application layer, an application framework layer, Android runtime (Android runtime) and a system library, and a kernel layer from top to bottom.

The application layer may include a series of application packages. As shown in FIG. 5, the application packages may include applications such as camera, gallery, calendar, phone, map, navigation, WLAN, Bluetooth, music, video, and SMS message.

The application framework layer provides an application programming interface (application programming interface, API) and a programming framework for applications at the application layer. The application framework layer includes some predefined functions. As shown in FIG. 5, the application framework layer may include a window manager, a content provider, a resource manager, a notification manager, a view system, and the like.

The window manager is configured to manage a window program. The window manager may obtain a size of a display, determine whether there is a status bar, lock a screen, take a screenshot, and the like. The content provider is configured to store and obtain data, and enable the data to be accessible to an application. The data may include a video, an image, audio, prior frequency information, browsing history, a bookmark, and the like. The resource manager provides resources for the application, such as a localized string, an icon, a picture, a layout file, and a video file. The notification manager enables the application to display notification information in the status bar, and may be configured to convey a notification-type message. The notification-type message may automatically disappear after a short stay without user interaction. For example, the notification manager is configured to: notify that downloading is completed, or prompt a message. The notification manager may alternatively be a notification that appears in a top status bar of a system in a form of a graph or a scroll bar text, for example, a notification of an application running in the background or a notification that appears on a screen in a form of a dialog window. For example, text information is displayed in the status bar, a prompt tone is made, vibration is performed, and an indicator light flashes.

The view system includes visual controls such as a control for displaying a text and a control for displaying a picture. The view system may be used to build an application. A display interface may include one or more views. For example, a display interface including an SMS notification icon may include a view for displaying a text and a view for displaying a picture.

The Android Runtime includes a core library and a virtual machine. The Android runtime is responsible for scheduling and management of an Android system. **In** some embodiments of this application, the cold start of an application runs in the Android runtime, and the Android runtime obtains an optimized file status parameter of the application. Then, the Android runtime can determine, based on the optimized file status parameter, whether an optimized file expires due to system upgrade, and return a determining result to an application control module.

The core library includes two parts: a functional function that needs to be invoked by a java language, and a core library of Android. The application layer and the application framework layer run in the virtual machine. The virtual machine converts a java file at the application layer and the application framework layer into a binary file for execution. The virtual machine is configured to perform functions such as management of a life cycle of an object, stack management, thread management, security and abnormality management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL). The surface manager is configured to manage a display subsystem, and provide fusion of 2D and 3D layers for a plurality of applications. The media library supports playback and recording of audio and videos in various commonly used formats, still image files, and the like. The media library may support a plurality of audio and video coding formats, such as PEG2, H.262, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for 2D drawings.

The kernel layer is a layer between hardware and software. The kernel layer includes at least a display driver, a camera driver, an audio driver, and a sensor driver.

It should be noted that although embodiments of this application are described by using the Android system as an example, the basic principle thereof is also applicable to a terminal that is based on an operating system such as iOS and Windows.

An embodiment of this application further provides a computer storage medium. The computer storage medium includes computer instructions, and when the computer instructions are run on a terminal, the terminal is enabled to perform the foregoing cell reselection method.

An embodiment of this application further provides a computer program product. The computer program product includes a computer program, and when the computer program is run by a terminal, the terminal is enabled to perform the foregoing cell reselection method.

## Claims

1. A cell reselection method, wherein the method comprises:
selecting (S101), by a terminal, at least one piece of target prior frequency information from a plurality of pieces of prior frequency information, wherein the terminal selects the at least one piece of target prior frequency information from the plurality of pieces of prior frequency information based on whether a currently registered public land mobile network belongs to a public land mobile network co-constructed and shared by operators and/or whether the terminal can roam to another public land mobile network, so that the terminal selects the target prior frequency information from prior frequency information of the public land mobile network co-constructed and shared by operators and/or prior frequency information of the another public land mobile network to which the terminal can roam, wherein the prior frequency information is frequency information of a cell in a public land mobile network of an operator on which the terminal successfully camps previously;
performing (S102), by the terminal, measurement and reselection evaluation based on the target prior frequency information; and
performing (S103), by the terminal, cell reselection based on a reselection evaluation result, wherein the selecting (S101), by a terminal, at least one piece of target prior frequency information from a plurality of pieces of prior frequency information comprises:
selecting the at least one piece of target prior frequency information from the plurality of pieces of prior frequency information based on a use scenario of the terminal, wherein the selecting the at least one piece of target prior frequency information from the plurality of pieces of prior frequency information based on a use scenario of the terminal comprises:
selecting, from the plurality of pieces of prior frequency information based on the use scenario of the terminal, target prior frequency information of an area that is the same as an area in which the terminal is located.

2. The method according to claim 1, wherein the target prior frequency information is added to a neighboring cell configuration, and the neighboring cell configuration comprises neighboring cell frequency information configured by a network device; and
the performing (S102) measurement and reselection evaluation based on the target prior frequency information comprises: performing measurement based on a neighboring cell frequency in the neighboring cell frequency information to obtain a first measurement result, and performing reselection evaluation on the first measurement result based on a neighboring cell reselection configuration in the neighboring cell frequency information; and
performing measurement based on a prior frequency in the target prior frequency information to obtain a second measurement result, and performing reselection evaluation on the second measurement result based on a prior reselection configuration in the target prior frequency.

3. The method according to claim 1, wherein the selecting, from the plurality of pieces of prior frequency information based on the use scenario of the terminal, target prior frequency information of an area that is the same as an area in which the terminal is located comprises:
determining the use scenario of the terminal as a first use scenario, wherein in the first use scenario, the terminal registers with a first public land mobile network and the terminal is in a first area; and
selecting, from the plurality of pieces of prior frequency information, a target prior frequency is corresponding to the first area and belonging to a same operator as the first public land mobile network.

4. The method according to claim 1, wherein the selecting, from the plurality of pieces of prior frequency information based on the use scenario of the terminal, target prior frequency information of an area that is the same as an area in which the terminal is located comprises:
determining the use scenario of the terminal as a second use scenario, wherein in the second use scenario, the terminal registers with a second public land mobile network and the terminal is in a second area; and
selecting target prior frequency information that meets a first condition and target prior frequency information that meets a second condition from the plurality of pieces of prior frequency information, wherein the first condition is: belonging to a same operator as the second public land mobile network and being in the second area, and the second condition is: being in a public land mobile network co-constructed and shared by an operator to which the second public land mobile network belongs and being in the second area.

5. The method according to claim 1, wherein the selecting, from the plurality of pieces of prior frequency information based on the use scenario of the terminal, target prior frequency information of an area that is the same as an area in which the terminal is located comprises:
determining the use scenario of the terminal as a third use scenario, wherein in the third use scenario, the terminal registers with a third public land mobile network and the terminal is in a third area; and
selecting target prior frequency information that meets a third condition and target prior frequency information that meets a fourth condition from the plurality of pieces of prior frequency information, wherein the third condition is: belonging to a same operator as the third public land mobile network and being in the third area, and the fourth condition is: being in a public land mobile network roamed to from the third public land mobile network and being in the third area.

6. The method according to claim 1, wherein the selecting, from the plurality of pieces of prior frequency information based on the use scenario of the terminal, target prior frequency information of an area that is the same as an area in which the terminal is located comprises:
determining the use scenario of the terminal as a fourth use scenario, wherein in the fourth use scenario, the terminal registers with a fourth public land mobile network and the terminal is in a fourth area; and
selecting target prior frequency information that meets a fifth condition, target prior frequency information that meets a sixth condition, and target prior frequency information that meets a seventh condition from the plurality of pieces of prior frequency information, wherein the fifth condition is: belonging to a same operator as the fourth public land mobile network and being in the fourth area, the sixth condition is: being in a public land mobile network co-constructed and shared by operators to which the fourth public land mobile network belongs and being in the fourth area, and the seventh condition is: being in a public land mobile network roamed to from the fourth public land mobile network and being in the fourth area.

7. The method according to any one of claims 1 and 3 to 6, wherein the selecting (S101), by a terminal, at least one piece of target prior frequency information from a plurality of pieces of prior frequency information comprises:
selecting the at least one piece of target prior frequency information from the plurality of pieces of prior frequency information based on a priority of the prior frequency information.

8. The method according to claim 7, wherein if the target prior frequency information is added to the neighboring cell configuration, an amount of frequency information in the neighboring cell configuration is less than or equal to a preset amount.

9. The method according to any one of claims 1 and 3 to 6, wherein the selecting (S101), by a terminal, at least one piece of target prior frequency information from a plurality of pieces of prior frequency information comprises:
selecting the at least one piece of target prior frequency information from the plurality of pieces of prior frequency information when the terminal determines that a preset condition is met, wherein the preset condition comprises a first preset condition and/or a second preset condition;
the first preset condition is that an amount of neighboring cell frequency information configured by the network device in the neighboring cell configuration is less than an amount threshold, or there is no neighboring cell frequency information in the neighboring cell configuration; and
the second preset condition is that signal quality of a currently accessed cell is less than a first threshold and the terminal is not switched to a cell whose signal quality is greater than a second threshold within preset time, wherein the first threshold is less than the second threshold.

10. The method according to any one of claims 1 and 3 to 6, wherein the method further comprises:
obtaining the prior frequency information of each frequency based on related information of a plurality of frequencies on which the terminal successfully camps.

11. A terminal, wherein the terminal comprises a processor and a memory, the memory is configured to store computer program code comprising computer instructions, which, when executed by the processor, cause the terminal to perform the cell reselection method according to any one of claims 1 to 10.

12. A computer storage medium, wherein the computer storage medium comprises computer instructions which, when run on a terminal, cause the terminal to perform the cell reselection method according to any one of claims 1 to 10.

## Patentansprüche

1. Ein Zellreselektionsverfahren, wobei das Verfahren Folgendes umfasst:
Auswahl (S101) durch ein Terminal von mindestens einem Ziel-Informationselement der vorherigen Frequenzinformation aus einer Vielzahl von vorherigen Frequenzinformationen, wobei das Terminal das mindestens eine Ziel-Informationselement der vorherigen Frequenzinformation aus der Vielzahl von vorherigen Frequenzinformationen auswählt, basierend darauf, ob ein aktuell registriertes öffentliches Landmobilfunknetz zu einem von Betreibern gemeinsam errichteten und geteilten öffentlichen Landmobilfunknetz gehört und/oder ob das Terminal in ein anderes öffentliches Landmobilfunknetz roamen kann, so dass das Terminal die Ziel-Frequenzinformation entweder aus vorherigen Frequenzinformationen des gemeinsam errichteten und geteilten öffentlichen Landmobilfunknetzes der Betreiber und/oder aus vorherigen Frequenzinformationen eines anderen öffentlichen Landmobilfunknetzes auswählt, in das das Terminal roamen kann, wobei die vorherigen Frequenzinformationen Frequenzinformationen einer Zelle in einem öffentlichen Landmobilfunknetz eines Betreibers sind, auf die das Terminal zuvor erfolgreich gewechselt hat;
Durchführung (S102) der Messung und Reselektionsbewertung durch das Terminal basierend auf der Ziel-vorherigen Frequenzinformation; und
Durchführung (S103) der Zellreselektion durch das Terminal basierend auf einem Reselektionsbewertungsergebnis, wobei die Auswahl (S101) durch ein Terminal von mindestens einer Ziel-vorherigen Frequenzinformation aus einer Vielzahl von vorherigen Frequenzinformationen Folgendes umfasst:
Auswahl von mindestens einer Ziel-vorherigen Frequenzinformation aus der Vielzahl von vorherigen Frequenzinformationen basierend auf einem Nutzungsszenario des Terminals, wobei die Auswahl von mindestens einer Ziel-vorherigen Frequenzinformation aus der Vielzahl von vorherigen Frequenzinformationen basierend auf einem Nutzungsszenario des Terminals Folgendes umfasst:
Auswahl der Ziel-vorherigen Frequenzinformation eines Gebiets aus der Vielzahl von vorherigen Frequenzinformationen basierend auf dem Nutzungsszenario des Terminals, wobei das Gebiet mit dem Gebiet übereinstimmt, in dem sich das Terminal befindet.

2. Verfahren nach Anspruch 1, wobei die Ziel-vorherige Frequenzinformation einer Nachbarzellkonfiguration hinzugefügt wird und die Nachbarzellkonfiguration Frequenzinformationen benachbarter Zellen umfasst, die von einem Netzgerät konfiguriert wurden; und
Die Durchführung (S102) der Messung und der Reselektionsbewertung basierend auf der Ziel-vorherigen Frequenzinformation umfasst: Durchführung der Messung basierend auf einer Nachbarzellfrequenz in den Nachbarzellfrequenzinformationen, um ein erstes Messergebnis zu erhalten, und Durchführung der Reselektionsbewertung dieses ersten Messergebnisses basierend auf einer Nachbarzell-Reselektionskonfiguration in den Nachbarzellfrequenzinformationen; und
Durchführen einer Messung basierend auf einer vorherigen Frequenz in den ZielInformationen zur vorherigen Frequenz, um ein zweites Messergebnis zu erhalten, und Durchführung einer Neuauswahlbewertung des zweiten Messergebnisses basierend auf einer vorherigen Neuauswahlkonfiguration in der Ziel-vorherigen Frequenz.

3. Verfahren nach Anspruch 1, wobei das Auswählen, aus der Vielzahl von Informationen über vorherige Frequenzen basierend auf dem Nutzungsszenario des Endgeräts, von ZielInformationen zur vorherigen Frequenz eines Gebiets, das mit dem Gebiet übereinstimmt, in dem sich das Endgerät befindet, Folgendes umfasst:
Bestimmen des Nutzungsszenarios des Endgeräts als ein erstes Nutzungsszenario, wobei im ersten Nutzungsszenario das Endgerät bei einem ersten öffentlichen landgebundenen Mobilfunknetz registriert ist und sich das Endgerät in einem ersten Gebiet befindet; und
Auswählen, aus der Vielzahl von Informationen über vorherige Frequenzen, einer Ziel-vorherigen Frequenz, die dem ersten Gebiet entspricht und zu demselben Betreiber wie das erste öffentliche landgebundene Mobilfunknetz gehört.

4. Verfahren nach Anspruch 1, wobei das Auswählen, aus der Vielzahl von Informationen über vorherige Frequenzen basierend auf dem Nutzungsszenario des Endgeräts, von ZielInformationen zur vorherigen Frequenz eines Gebiets, das mit dem Gebiet übereinstimmt, in dem sich das Endgerät befindet, Folgendes umfasst:
Bestimmen des Nutzungsszenarios des Endgeräts als ein zweites Nutzungsszenario, wobei im zweiten Nutzungsszenario das Endgerät bei einem zweiten öffentlichen landgebundenen Mobilfunknetz registriert ist und sich das Endgerät in einem zweiten Gebiet befindet; und
Auswählen von Zielinformationen zur vorherigen Frequenz, die eine erste Bedingung erfüllen, und Zielinformationen zur vorherigen Frequenz, die eine zweite Bedingung erfüllen, aus der Vielzahl von Informationen über vorherige Frequenzen, wobei die erste Bedingung ist: Zugehörigkeit zu demselben Betreiber wie das zweite öffentliche landgebundene Mobilfunknetz und sich im zweiten Gebiet befinden, und die zweite Bedingung ist: sich in einem von einem Betreiber, zu dem das zweite öffentliche landgebundene Mobilfunknetz gehört, gemeinsam aufgebauten und geteilten öffentlichen landgebundenen Mobilfunknetz zu befinden und sich im zweiten Gebiet zu befinden.

5. Verfahren nach Anspruch 1, wobei das Auswählen, aus der Vielzahl von Informationen über vorherige Frequenzen basierend auf dem Nutzungsszenario des Endgeräts, von ZielInformationen zur vorherigen Frequenz eines Gebiets, das mit dem Gebiet übereinstimmt, in dem sich das Endgerät befindet, Folgendes umfasst:
Bestimmen des Nutzungsszenarios des Endgeräts als ein drittes Nutzungsszenario, wobei im dritten Nutzungsszenario das Endgerät bei einem dritten öffentlichen landgebundenen Mobilfunknetz registriert ist und sich das Endgerät in einem dritten Gebiet befindet; und
Auswahl von Ziel-Vorfrequenzinformationen, die eine dritte Bedingung erfüllen, und Ziel-Vorfrequenzinformationen, die eine vierte Bedingung aus der Vielzahl von Vorfrequenzinformationen erfüllen, wobei die dritte Bedingung ist: demselben Betreiber wie das dritte öffentliche landesweite Mobilfunknetz (PLMN) anzugehören und sich im dritten Gebiet zu befinden, und die vierte Bedingung ist: sich in einem öffentlichen landesweiten Mobilfunknetz zu befinden, das vom dritten öffentlichen landesweiten Mobilfunknetz aus geräumt wird, und sich im dritten Gebiet zu befinden.

6. Verfahren nach Anspruch 1, wobei das Auswählen der Ziel-Vorfrequenzinformationen eines Gebiets, das mit dem Gebiet, in dem sich das Endgerät befindet, identisch ist, aus der Vielzahl von Vorfrequenzinformationen auf Basis des Nutzungsszenarios des Endgeräts beinhaltet:
Bestimmen des Nutzungsszenarios des Endgeräts als viertes Nutzungsszenario, wobei in diesem vierten Nutzungsszenario das Endgerät sich bei einem vierten öffentlichen landesweiten Mobilfunknetz (PLMN) registriert und sich im vierten Gebiet befindet; und
Auswahl von Ziel-Vorfrequenzinformationen, die eine fünfte Bedingung erfüllen, Ziel-Vorfrequenzinformationen, die eine sechste Bedingung erfüllen, und Ziel-Vorfrequenzinformationen, die eine siebte Bedingung aus der Vielzahl von Vorfrequenzinformationen erfüllen, wobei die fünfte Bedingung ist: dem gleichen Betreiber wie das vierte öffentliche landesweite Mobilfunknetz anzugehören und sich im vierten Gebiet zu befinden, die sechste Bedingung ist: sich in einem von den Betreibern, zu denen das vierte öffentliche landesweite Mobilfunknetz gehört, gemeinsam aufgebauten und genutzten öffentlichen landesweiten Mobilfunknetz zu befinden und sich im vierten Gebiet zu befinden, und die siebte Bedingung ist: sich in einem vom vierten öffentlichen landesweiten Mobilfunknetz aus geräumten öffentlichen landesweiten Mobilfunknetz zu befinden und sich im vierten Gebiet zu befinden.

7. Verfahren nach einem der Ansprüche 1 und 3 bis 6, wobei das Auswählen (S101) von mindestens einer Ziel-Vorfrequenzinformation aus einer Vielzahl von Vorfrequenzinformationen durch ein Endgerät Folgendes umfasst:
Auswahl von mindestens einer Ziel-Vorfrequenzinformation aus der Vielzahl von Vorfrequenzinformationen auf Basis einer Priorität der Vorfrequenzinformationen.

8. Verfahren nach Anspruch 7, wobei, wenn die Ziel-Vorfrequenzinformation der Nachbarzellenkonfiguration hinzugefügt wird, die Menge an Frequenzinformationen in der Nachbarzellenkonfiguration kleiner oder gleich einem voreingestellten Wert ist.

9. Verfahren nach einem der Ansprüche 1 und 3 bis 6, wobei das Auswählen (S101) von mindestens einer Ziel-Vorfrequenzinformation aus einer Vielzahl von Vorfrequenzinformationen durch ein Endgerät Folgendes umfasst:
Auswahl von mindestens einem Zielstück vorheriger Frequenzinformationen aus der Mehrzahl von vorherigen Frequenzinformationen, wenn das Terminal feststellt, dass eine Voreinstellung erfüllt ist, wobei die Voreinstellung eine erste Voreinstellung und/oder eine zweite Voreinstellung umfasst;
Die erste Voreinstellung besteht darin, dass die vom Netzwerkgerät in der Nachbarzellenkonfiguration konfigurierte Menge an Nachbarzellenfrequenzinformationen kleiner als ein Mengenschwellenwert ist oder keine Nachbarzellenfrequenzinformationen in der Nachbarzellenkonfiguration vorhanden sind; und
Die zweite Voreinstellung besteht darin, dass die Signalqualität der aktuell genutzten Zelle unter einem ersten Schwellenwert liegt und das Terminal innerhalb einer vorgegebenen Zeit nicht auf eine Zelle umgeschaltet wird, deren Signalqualität größer als ein zweiter Schwellenwert ist, wobei der erste Schwellenwert kleiner als der zweite Schwellenwert ist.

10. Verfahren nach Anspruch 1 und 3 bis 6, wobei das Verfahren ferner umfasst:
Ermitteln der vorherigen Frequenzinformationen jeder Frequenz basierend auf zugehörigen Informationen einer Vielzahl von Frequenzen, auf denen das Terminal erfolgreich verweilt.

11. Ein Terminal, wobei das Terminal einen Prozessor und einen Speicher umfasst, wobei der Speicher zum Speichern von Computerprogrammcodes mit Computeranweisungen konfiguriert ist, welche, wenn sie vom Prozessor ausgeführt werden, das Terminal dazu veranlassen, das Zellreselektionsverfahren nach einem der Ansprüche 1 bis 10 auszuführen.

12. Ein Computerspeichermedium, wobei das Computerspeichermedium Computeranweisungen umfasst, die, wenn sie auf einem Terminal ausgeführt werden, das Terminal dazu veranlassen, das Zellreselektionsverfahren nach einem der Ansprüche 1 bis 10 auszuführen.

## Revendications

1. Procédé de resélection de cellule, ledit procédé comprenant :
sélection, par un terminal (S101), d'au moins une information de fréquence antérieure cible parmi une pluralité d'informations de fréquence antérieure, le terminal sélectionnant au moins une information de fréquence antérieure cible parmi la pluralité d'informations de fréquence antérieure en fonction du fait qu'un réseau public terrestre mobile actuellement enregistré appartient à un réseau public terrestre mobile co-construit et partagé par des opérateurs et/ou du fait que le terminal peut effectuer un itinérance vers un autre réseau public terrestre mobile, de sorte que le terminal sélectionne l'information de fréquence antérieure cible à partir des informations de fréquence antérieure du réseau public terrestre mobile co-construit et partagé par des opérateurs et/ou des informations de fréquence antérieure de l'autre réseau public terrestre mobile vers lequel le terminal peut effectuer un itinérance, ladite information de fréquence antérieure étant une information de fréquence d'une cellule dans un réseau public terrestre mobile d'un opérateur sur lequel le terminal s'est déjà raccordé avec succès ;
réalisation, par le terminal (S102), de mesures et d'une évaluation de resélection sur la base de l'information de fréquence antérieure cible ; et
réalisation, par le terminal (S103), d'une resélection de cellule sur la base d'un résultat d'évaluation de resélection, la sélection (S101), par un terminal, d'au moins une information de fréquence antérieure cible parmi une pluralité d'informations de fréquence antérieure comprenant :
sélection d'au moins une information de fréquence antérieure cible parmi la pluralité d'informations de fréquence antérieure en fonction d'un scénario d'utilisation du terminal, ladite sélection d'au moins une information de fréquence antérieure cible parmi la pluralité d'informations de fréquence antérieure sur la base d'un scénario d'utilisation du terminal comprenant :
sélection, à partir de la pluralité d'informations de fréquence antérieure sur la base du scénario d'utilisation du terminal, de l'information de fréquence antérieure cible d'une zone qui est identique à la zone dans laquelle se trouve le terminal.

2. Procédé selon la revendication 1, dans lequel l'information de fréquence antérieure cible est ajoutée à une configuration de cellule voisine, et la configuration de cellule voisine comprend des informations de fréquence de cellule voisine configurées par un dispositif réseau ; et
la réalisation (S102) des mesures et de l'évaluation de resélection sur la base de l'information de fréquence antérieure cible comprend : exécuter des mesures sur la base d'une fréquence de cellule voisine dans les informations de fréquence de cellule voisine pour obtenir un premier résultat de mesure, et effectuer l'évaluation de resélection sur le premier résultat de mesure sur la base d'une configuration de resélection de cellule voisine dans les informations de fréquence de cellule voisine ; et
effectuer une mesure basée sur une fréquence antérieure dans les informations de fréquence antérieure cibles afin d'obtenir un second résultat de mesure, et effectuer une évaluation de resélection sur le second résultat de mesure en fonction d'une configuration de resélection antérieure dans la fréquence antérieure cible.

3. Le procédé selon la revendication 1, dans lequel la sélection, parmi la pluralité d'informations de fréquence antérieure sur la base du scénario d'utilisation du terminal, d'une information de fréquence antérieure cible d'une zone identique à celle dans laquelle se trouve le terminal comprend :
déterminer le scénario d'utilisation du terminal comme étant un premier scénario d'utilisation, dans lequel, dans le premier scénario d'utilisation, le terminal s'enregistre auprès d'un premier réseau mobile terrestre public et le terminal se trouve dans une première zone ; et
sélectionner, parmi la pluralité d'informations de fréquence antérieure, une fréquence antérieure cible correspondant à la première zone et appartenant à un même opérateur que le premier réseau mobile terrestre public.

4. Le procédé selon la revendication 1, dans lequel la sélection, parmi la pluralité d'informations de fréquence antérieure sur la base du scénario d'utilisation du terminal, d'une information de fréquence antérieure cible d'une zone identique à celle dans laquelle se trouve le terminal comprend :
déterminer le scénario d'utilisation du terminal comme étant un second scénario d'utilisation, dans lequel, dans le second scénario d'utilisation, le terminal s'enregistre auprès d'un second réseau mobile terrestre public et le terminal se trouve dans une seconde zone ; et
sélectionner, parmi la pluralité d'informations de fréquence antérieure, une information de fréquence antérieure cible répondant à une première condition et une information de fréquence antérieure cible répondant à une seconde condition, la première condition étant : appartenir à un même opérateur que le second réseau mobile terrestre public et être dans la seconde zone, et la seconde condition étant : être dans un réseau mobile terrestre public co-construit et partagé par un opérateur auquel appartient le second réseau mobile terrestre public et être dans la seconde zone.

5. Le procédé selon la revendication 1, dans lequel la sélection, parmi la pluralité d'informations de fréquence antérieure sur la base du scénario d'utilisation du terminal, d'une information de fréquence antérieure cible d'une zone identique à celle dans laquelle se trouve le terminal comprend :
déterminer le scénario d'utilisation du terminal comme étant un troisième scénario d'utilisation, dans lequel, dans le troisième scénario d'utilisation, le terminal s'enregistre auprès d'un troisième réseau mobile terrestre public et le terminal se trouve dans une troisième zone ; et
sélection d'informations antérieures de fréquence cible satisfaisant une troisième condition et d'informations antérieures de fréquence cible satisfaisant une quatrième condition parmi la pluralité d'informations antérieures de fréquence, la troisième condition étant : appartenir au même opérateur que le troisième réseau public mobile terrestre et se trouver dans la troisième zone, et la quatrième condition étant : se trouver dans un réseau public mobile terrestre vers lequel l'utilisateur a fait un itinérance à partir du troisième réseau public mobile terrestre et se trouver dans la troisième zone.

6. Le procédé selon la revendication 1, dans lequel la sélection, à partir de la pluralité d'informations antérieures de fréquence, d'informations antérieures de fréquence cible d'une zone identique à celle dans laquelle le terminal est situé, comprend :
détermination du scénario d'utilisation du terminal comme un quatrième scénario d'utilisation, dans lequel, dans le quatrième scénario d'utilisation, le terminal s'enregistre auprès d'un quatrième réseau public mobile terrestre et le terminal se trouve dans une quatrième zone ; et
sélection d'informations antérieures de fréquence cible satisfaisant une cinquième condition, d'informations antérieures de fréquence cible satisfaisant une sixième condition, et d'informations antérieures de fréquence cible satisfaisant une septième condition parmi la pluralité d'informations antérieures de fréquence, la cinquième condition étant : appartenir au même opérateur que le quatrième réseau public mobile terrestre et se trouver dans la quatrième zone, la sixième condition étant : se trouver dans un réseau public mobile terrestre co-construit et partagé par les opérateurs auxquels appartient le quatrième réseau public mobile terrestre et se trouver dans la quatrième zone, et la septième condition étant : se trouver dans un réseau public mobile terrestre vers lequel l'utilisateur a fait un itinérance à partir du quatrième réseau public mobile terrestre et se trouver dans la quatrième zone.

7. Le procédé selon l'une quelconque des revendications 1 et 3 à 6, dans lequel la sélection (S101), par un terminal, d'au moins une information antérieure de fréquence cible parmi une pluralité d'informations antérieures de fréquence, comprend :
sélection de l'au moins une information antérieure de fréquence cible parmi la pluralité d'informations antérieures de fréquence en fonction de la priorité des informations antérieures de fréquence.

8. Le procédé selon la revendication 7, dans lequel, si l'information antérieure de fréquence cible est ajoutée à la configuration des cellules voisines, la quantité d'informations de fréquence dans la configuration des cellules voisines est inférieure ou égale à une quantité prédéfinie.

9. Le procédé selon l'une quelconque des revendications 1 et 3 à 6, dans lequel la sélection (S101), par un terminal, d'au moins une information antérieure de fréquence cible parmi une pluralité d'informations antérieures de fréquence, comprend :
sélectionner au moins une information de fréquence antérieure cible parmi la pluralité d'informations de fréquence antérieure lorsque le terminal détermine qu'une condition prédéfinie est remplie, la condition prédéfinie comprenant une première condition prédéfinie et/ou une seconde condition prédéfinie ;
la première condition prédéfinie est qu'une quantité d'informations de fréquence de cellule voisine configurée par l'équipement de réseau dans la configuration de cellule voisine est inférieure à un seuil de quantité, ou qu'il n'y a pas d'information de fréquence de cellule voisine dans la configuration de cellule voisine ; et
la seconde condition prédéfinie est que la qualité du signal d'une cellule actuellement accédée est inférieure à un premier seuil et que le terminal n'est pas commuté vers une cellule dont la qualité de signal est supérieure à un second seuil dans un délai prédéfini, le premier seuil étant inférieur au second seuil.

10. Le procédé selon l'une quelconque des revendications 1 et 3 à 6, ledit procédé comprenant en outre :
obtenir l'information de fréquence antérieure de chaque fréquence à partir des informations relatives à une pluralité de fréquences sur lesquelles le terminal s'est connecté avec succès.

11. Un terminal, ledit terminal comprenant un processeur et une mémoire, la mémoire étant configurée pour stocker un code de programme informatique comprenant des instructions informatiques qui, lorsqu'elles sont exécutées par le processeur, amènent le terminal à exécuter le procédé de resélection de cellule selon l'une quelconque des revendications 1 à 10.

12. Un support de stockage informatique, ledit support comprenant des instructions informatiques qui, lorsqu'elles sont exécutées sur un terminal, amènent le terminal à exécuter le procédé de resélection de cellule selon l'une quelconque des revendications 1 à 10.
